# EUROPEAN PATENT SPECIFICATION

(11) **EP 2 692 221 B1**
(45) Date of publication and mention of the grant of the patent: **25.05.2016**
(21) Application number: 13177275.8
(22) Date of filing: 19.07.2013
(51) Int. Cl.: A01D 34/416

(54) **Grass-cutting head**
Grassschneidekopf
Tête de coupe d'herbe

(30) Priority: 02.08.2012 IT FI20120159
(43) Date of publication of application: 05.02.2014
(73) Proprietor: Arnetoli Motor S.r.l., 50066 Reggello (FI) (IT)
(72) Inventor: Arnetoli, Fabrizio, 50066 Reggello (FI) (IT)
(74) Representative: Mannucci, Michele

(56) References cited:
- US-A1- 2012 066 915
- US-B1- 6 457 242

## Description

### TECHNICAL FIELD

The present invention relates to the field of brushcutters, and more particularly relates to an axial rotation grass-cutting head, with replaceable cutting line, for brushcutters.

### State of the art

As is known, there exist substantially two types of rotary grass-cutting heads for brushcutters. These types are substantially heads that carry an integrated reel of spare line, and heads that carry a plurality of single pieces of line inserted into the head, generally with one or two ends of each piece projecting from the head to perform the cutting.

In the latter case, there are multiple head construction solutions, and they generally involve a non-negligible structural complexity, which impacts on the production costs of the heads.

US Pat. N. 6,457,242 discloses an axial rotation grass-cutting head comprising an upper body and a lower body. The upper body has a cylindrical portion including pairs of through holes. The lower body comprises a plug which is insertable in the cylindrical portion of the upper body. The plug has arcuate slots or channels in the surface thereof. These arcuate slots extend from one hole to the other of said pairs of through holes provided in the upper body, thus defining channels wherein portions of cutting line can be housed and retained.

### Object and summary of the invention

The aim of the present invention is to provide an axial-rotation grass-cutting head for brushcutters, with replaceable cutting line, which is structurally simple.

Another important aim of the present invention is to provide an axial rotation grass-cutting head, with replaceable cutting line, which is operationally reliable.

A further important aim of the present invention is to provide an axial rotation grass-cutting head, with replaceable cutting line, that enables easy replacement of the cutting line.

Another, no less important, aim of the present invention is to provide an axial rotation grass-cutting head, with replaceable cutting line, that is sturdy.

These and other aims that will become more apparent from the following description, are achieved by an axial rotation grass-cutting head according to claim 1 below.

According to the invention, the grass-cutting head, for at least one portion thereof, comprises an upper body, a lower body and at least one intermediate body arranged between the upper body and the lower body, with said upper, lower and intermediate bodies defining, in said portion, when coupled, two channels for housing a single cutting line, having respective end openings on the side face of the head; the term 'head portion' refers to an angular portion or angular sector, in other words a head portion comprised between two radial planes with respect to the rotation axis (where the head structure may comprise a single angular sector, possibly even equivalent to an entire 360° angle, i.e. corresponding to the entire head, and shaped according to the claims, or several angular sectors shaped according to the claims, for example arranged with a certain degree of symmetry around the rotation axis); the term 'head portion' also refers to an axial portion, in other words a portion shaped according to the claim which may be repeated in series in an axial direction, in practice creating a multi-level cutting head, i.e. with the cutting lines on a single angular head portion superimposed on said angular portion, and lying on planes substantially parallel to one another and orthogonal to the rotation axis. Also according to the invention, said channels are formed at least partly by grooves produced at the surfaces of the upper and lower bodies facing the intermediate body, or vice-versa on the intermediate body and facing said lower body and/or upper body; these grooves are closed and delimit the channels from the surface of said intermediate body or vice-versa by the surfaces of said upper and lower bodies (they may also be produced both on the upper and lower bodies and on the intermediate body, and joined in a complementary manner); the single cutting line is adapted to fit into the two channels with its ends exiting from the respective first end openings of the two channels and with the central portion of the line partially wound on the outer periphery of the head comprised between the second openings of the two channels, with the line respectively exiting and entering said second openings.

The fact that there are grooves, and therefore conduits open in a longitudinal direction, makes it possible to produce bodies containing the grooves without producing undercuts, which could complicate the structure of the head and increase the cost of molds.

According to certain advantageous embodiments, the upper body and the lower body define on the head, when coupled, at least one peripheral side cavity open toward the outside of the head, the inner surface of which is produced by the abutting of two peripheral half-surfaces of the related upper and lower bodies (possibly with a further interposed body forming a connecting surface between the two half-surfaces of the upper body and lower body) and in this configuration the at least one intermediate body is housed in said cavity; the upper, lower and intermediate bodies define, when coupled, the two channels for housing a single cutting line. These channels are delimited by the inner surface of the cavity and by the surface of the intermediate body facing said cavity. It can be said that the bottom of the grooves also indirectly forms the surface on which the grooves themselves are produced, and so the channels are defined by the coupling of the cavity with the intermediate body.

In certain preferred embodiments, the channels are defined completely or mainly on the inner surface of said cavity, created by grooves on the prevalent surface of the cavity.

In certain advantageous embodiments, each channel comprises two half-channels at least partially made on the respective peripheral half-surfaces of the respective upper and lower bodies defining the inner surface of the cavity; the two half-channels are arranged without interruption when the two upper and lower bodies are coupled.

Opportunely, the half-channels comprise grooves produced on said half-surfaces; the grooves are open toward the intermediate body delimiting the same grooves, to form the half-channels, and they are without undercut portions with respect to said opposite body, thereby obtaining a lower and upper body structure that is extremely simple.

Advantageously, the upper body and the lower body are each produced in one piece. Therefore the head in its "angular' entirety (i.e. not just an angular portion thereof, but rather 360°) may comprise two single bodies between which is arranged a single intermediate body or several intermediate bodies angularly staggered around the rotation axis, and with the single upper and lower bodies defining the channels for the cutting lines.

According to certain embodiments, the channels have a common section and a first common opening, i.e. the two first openings coincide in a single opening, whereby the single cutting line has the two cutting end portions which protrude from this first common opening.

According to the preferred embodiment, the end openings of the two channels are comprised in a limited angular sector of the head. The openings may be arranged so that the ends of the cutting line related to a pair of channels lie on a plane orthogonal to the rotation axis of the head, or on a vertical plane, i.e. preferably radial with respect to the rotation axis.

For example, the first and second end openings of the two channels may be advantageously aligned on respective planes orthogonal to the rotation axis of the head or on respective planes parallel to one another and parallel to a plane on which said rotation axis of the head lies.

Also for example, the second end openings of the two channels are aligned on a plane parallel or orthogonal to a plane on which the rotation axis of the head lies.

According to certain advantageous embodiments, the peripheral cavity defined between the upper and lower body, extends annularly around the whole of the head and the intermediate body is an annular body which is arranged in said annular cavity.

According to certain preferred embodiments, the channels are defined completely or mainly on the surface of the intermediate body facing said cavity, produced by means of grooves made on said surface.

According to certain preferred embodiments, the end openings of the channels are defined in the intermediate body, preferably in a U-shape, and are closed on one side respectively by said lower body and intermediate body.

According to preferred embodiments, the head comprises a plurality of said intermediate bodies arranged on the side periphery of said head, in a common annular cavity or, more preferably in respective cavities made annularly on the side periphery or side face of the head.

According to embodiments of the head, each intermediate body is arranged in a respective said cavity and has two said channels, with said first and second end openings produced on said body and arranged on respective planes parallel to the rotation axis of the heads, said channels being formed by grooves defined on the side surface of said intermediate body and closed to produce said channels by the surface of said cavity.

According to embodiments, the head comprises a plurality of said at least one portion of head comprising said upper body, said lower body and said intermediate body to define said two channels for the single cutting line, said portions being arranged angularly staggered in relation to each other around the rotation axis of the head.

According to embodiments, the head comprises a plurality of said at least one portion of head comprising said upper body, said lower body and said intermediate body to define said two channels for the single cutting line, said portions being arranged superimposed on one another in the same direction as the rotation axis of the head; said head thus comprising cutting zones provided with openings for the ends of the cutting line to exit through which are superimposed in an axial direction.

The parts that make up the head may be made in various materials, such as plastics or metals, for example.

The invention relates to the structure of a grass-cutting head without cutting line, as described above, and to a grass-cutting head system with a structure as described above, which includes at least one cutting line.

### Brief description of the drawings

Further characteristics and advantages of the invention will become more apparent from the description of several preferred but non-exclusive embodiments thereof, illustrated by way of non-limiting example in the accompanying drawings, wherein:
Figure 1 shows an axonometric view of a first embodiment of a grass-cutting head according to the invention;
Figure 2 shows a plan view of the head shown in Figure 1;
Figure 3 shows an exploded axonometric view of the head shown in Figure 1;
Figure 4 shows a sectional view along the plane III-III shown in Figure 2;
Figure 5 shows a variant of the first embodiment shown in the same view as Figure 4;
Figure 6 shows a further variant of the first embodiment shown in the same view as Figure 4;
Figure 7 shows an axonometric view of a second embodiment of the grass-cutting head according to the invention;
Figure 8 shows an exploded axonometric view of the head shown in Figure 7
Figure 9 shows a plan view of the head shown in Figure 7;
Figure 10 shows a sectional view along the plane X-X shown in Figure 9;
Figure 11 shows an axonometric view of a third embodiment of the grass-cutting head according to the invention;
Figure 12 shows an exploded axonometric view of the head shown in Figure 11;
Figure 13 shows a plan view of the head shown in Figure 11;
Figure 14 shows a sectional view along the plane XIV-XIV shown in Figure 13;
Figure 15 shows an axonometric view of a fourth embodiment of the grass-cutting head according to the invention;
Figure 16 shows an exploded axonometric view of the head shown in Figure 15;
Figure 17 shows an axonometric view of a fifth embodiment of the grass-cutting head according to the invention;
Figure 18 shows an exploded axonometric view of the head shown in Figure 17;
Figure 19 shows a plan view of the head shown in Figure 18;
Figure 20 shows a sectional view along the plane XX-XX shown in Figure 19;
Figure 21 shows an axonometric view of a sixth embodiment of the grass-cutting head according to the invention;
Figure 22 shows an exploded axonometric view of the head shown in Figure 21;
Figure 23 shows an axonometric view of a seventh embodiment of the grass-cutting head according to the invention;
Figure 24 shows an exploded axonometric view of the head shown in Figure 23;
Figure 25 shows a plan view of the head shown in Figure 23;
Figure 26 shows a sectional view along the plane XXVI-XXVI shown in 25.

### Detailed description of an embodiment of the invention

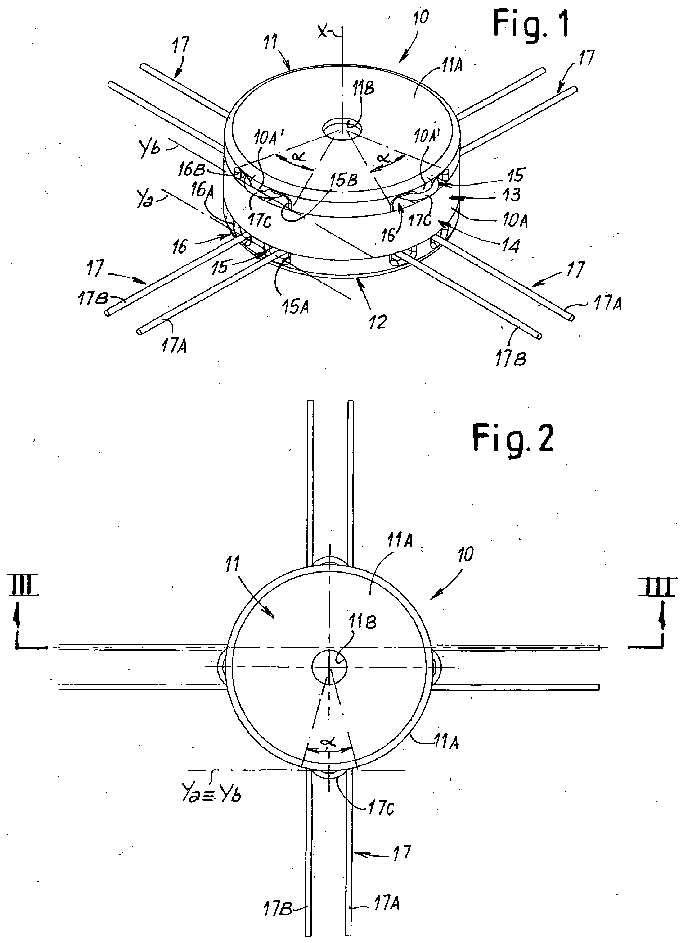

With reference to Figures 1, 2, 3 and 4 mentioned above, a first embodiment of the head is indicated by the number 10.

This head 10 comprises an upper body 11, discoidal with a circular plan shape and a lower body 12, also discoidal with a circular plan shape, coaxially coupled to the upper body 11. On the upper face 11 A of the upper body 11 there is a central through hole 11 B, for coupling to the rotating shaft of the brushcutter (not shown in the figures) with which the head is associated when in use. This hole 11 B finds a corresponding niche 12A in a hub 12B protruding axially from the lower body 12 and coupled with a corresponding housing defined in the upper body 11.

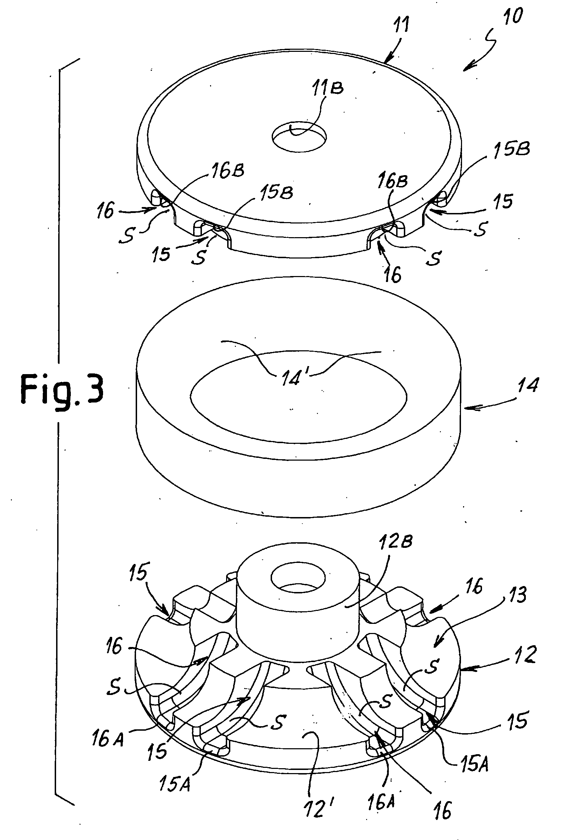

The upper body 11 and the lower body 12 define on the head, when coupled, a peripheral side cavity 13, annular in this example, open toward the outside of the head. The inner surface of this cavity is produced by the abutting, preferably without interruption, of two peripheral half-surfaces of the related upper body 11 and lower body 12. In practice, the cavity 13 is formed by a roof defined by the half-surface 11' of the upper body 11 facing downwards, a bottom defined by the half-surface 12' of the lower body facing upwards, and a bottom facing outwards defined at the meeting point of the half-surfaces 11'-12" of the upper and lower body that are connected to one another. In other examples the bottom 11 "-12" may be defined for example only by the half-surface of one of the two upper or lower bodies (for example see Figure 3bis). In other examples, the bottom may be formed for example by a further body interposed between the upper body and lower body.

The cavity 13 houses an intermediate body 14, in this example with an annular or toroidal shape, in practice sandwiched between the upper body 11 and lower body 12, and more precisely between the roof 11' and the base 12' of the cavity.

With the intermediate body 14 arranged between the upper body 11 and lower body 12, pairs of channels 15 and 16 are defined on the head 10 for housing a single cutting line 17. In this example, four pairs of channels are defined (for four respective cutting lines), arranged angularly staggered by 90° around the rotation axis X of the head. It goes without saying that in other embodiments there may be only one pair of channels for a single cutting line, or else the pairs of channels may be arranged in different angular arrangements around the axis X. In general, construction of the head (particular arrangement of the upper body, lower body, intermediate body, and pair of channels for each individual cutting line) described here with axial symmetry (around X) may be limited to a single angular portion of the head or to an axial portion thereof, as will become more apparent from other embodiments described below.

The channels 15 and 16 have respective end openings 15A-15B and 16A-16B defined on the side face 10A of the head. The single cutting line 17 is arranged with its ends 17A and 17B exiting from the respective first end openings 15A, 16A of the two channels 15 and 16 and with the central portion 17C of the line partially wound on the outer periphery of the head, i.e. on the part 10A' of the side face 10A of the head, comprised between the second openings 15B and 16B of the two channels, with the line respectively exiting and entering said second openings, as shown in Figure 1. From a practical point of view, the user takes the line 17 by one end 17A, inserts it into a first opening 15A, where the line follows the respective channel 15 and exits from the second opening 15B. The user then re-takes the end 17A exiting from the second opening 15B and threads it into the second opening 16B, partially winding around the part 10A' of the side face 10A of the head comprised between said second openings 15B and 16B. The line follows the second channel 16 and exits from its first opening 16A.

Therefore, the head 10 has a plurality of cutting lines (or only one in the simplest embodiment) that exit from respective openings defined on the side face 10A of the head 10 and where these openings, for each line, are comprised in a limited angular sector α of the head, for example comprised between 70° and 10°, and more preferably less than 45°. In practice, the head has cutting zones, in limited angular sectors, fitted with pairs of cutting organs corresponding to the ends of a single cutting line.

In practice, each channel 15 or 16 comprises two half-channels at least partially made on the respective peripheral half-surfaces 11' and 12' of the respective upper 11 and lower 12 bodies defining the inner surface of the cavity 13. In the example described, the two half-channels are defined without interruption when the two upper and lower bodies are coupled.

According to the invention, the channels 15 and 16 are formed by grooves S produced, in this embodiment, at the surfaces of the upper body 11 and lower 12 body facing the intermediate body 14, i.e., in this example, on the half-surfaces 11' and 12' defining the cavity. These grooves S are closed to delimit the channels by the surface 14' of the intermediate body 14 facing the cavity 13. In other embodiments (such as in certain examples presented below) the grooves may be made on the surface 14' of the intermediate body 14 facing the cavity 13 and closed by the surface 11', 12' of the cavity, or may be made both on the surface 14' of the intermediate body, and on the surface of the cavity 13 and facing so as to define the channels, or may be defined in only one part in the cavity or on the intermediate body and closed by the corresponding facing surfaces of the intermediate body or of the cavity respectively.

It should be noted that the grooves defined on the half-surfaces 11', 12' of the upper and lower bodies are without undercut portions with respect to the intermediate body 14 and in any case with respect to a plane orthogonal to the axis X.

In this example, due to the fact that the grooves are defined substantially on the upper and lower bodies, the end openings 15A, 16A, 15B, 16B are defined, in practice, as U-shape sections on the upper body 11 and lower body 12 and are closed on the open side of the "U" by the intermediate body 14. In other embodiments, wherein the grooves are defined for example on the intermediate body, the U-shape openings will be defined on this body and closed by the surface of the cavity 14; in the case of grooves both on the intermediate body and on the cavity, the openings will be defined partly on one and partly on the other.

According to some advantageous embodiments, the first 15A-16A and second 15B-16B end openings of the two channels 15 and 16 are aligned (lines Ya and Yb in figure 1 and 2) on respective planes orthogonal to the rotation axis X of the head.

Opportunely, in preferred embodiments, such as for example the embodiment described, the upper body 11 is one piece, as is the lower body 12 and also the intermediate body 14. In practice, the head is formed substantially from three main bodies, each one a single piece and of a shape without any undercut portions with respect to a surface orthogonal to the rotation axis of the head.

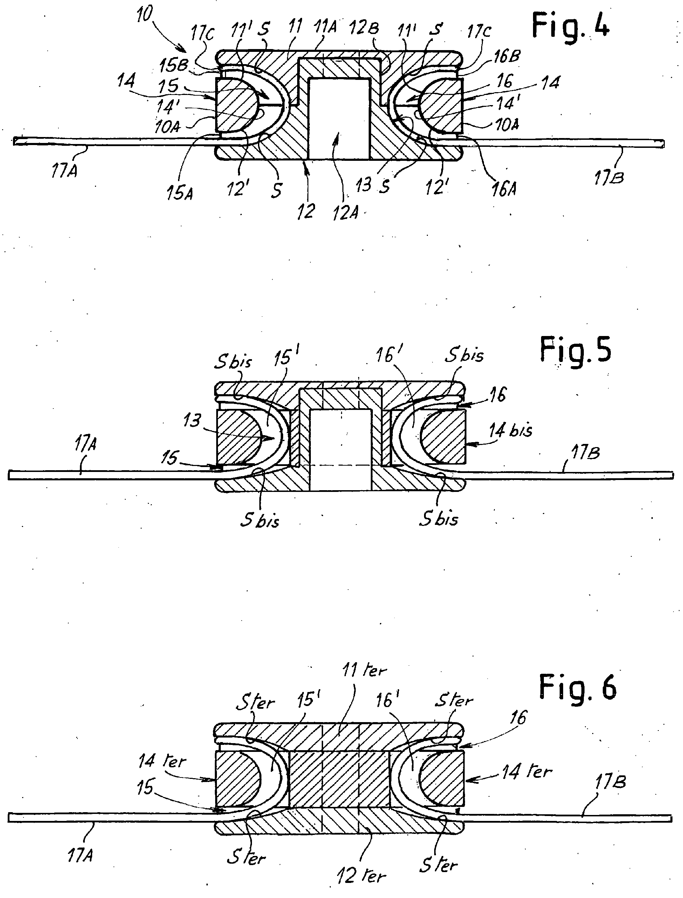

Figure 5 shows a first variant of the head 10, wherein the intermediate body, indicated here by the number 14bis (for simplicity, parts that are unchanged or that have changed in a non-significant manner, have the same numbering as in the previous example), has through holes 15', 16' forming respective parts of the channels 15 and 16, all inside of the intermediate body, while the end parts of the channels 15 and 16 are formed by the grooves S produced on the half-surfaces of the upper and lower bodies defining the cavity 14.

Figure 6 shows a second variant of the head 10, similar to the first variant shown in Figure 5, but in this case there is no cavity 13, i.e. the half-surfaces of the upper and lower bodies 11ter and 12ter (for simplicity, parts that are unchanged or that have changed in a non-significant manner, have the same numbering as in the previous example) do not come into contact with one another because the intermediate body 14ter is completely interposed between the two, like a "hamburger". In this case the channels 15 and 16 are nevertheless defined as in the first variant, i.e. the intermediate body 14ter has through holes 15", 16" forming respective parts of the channels 15 and 16, all inside the intermediate body, while the end parts of the channels 15 and 16 are formed by the grooves Ster produced on the half-surfaces of the upper and lower bodies.

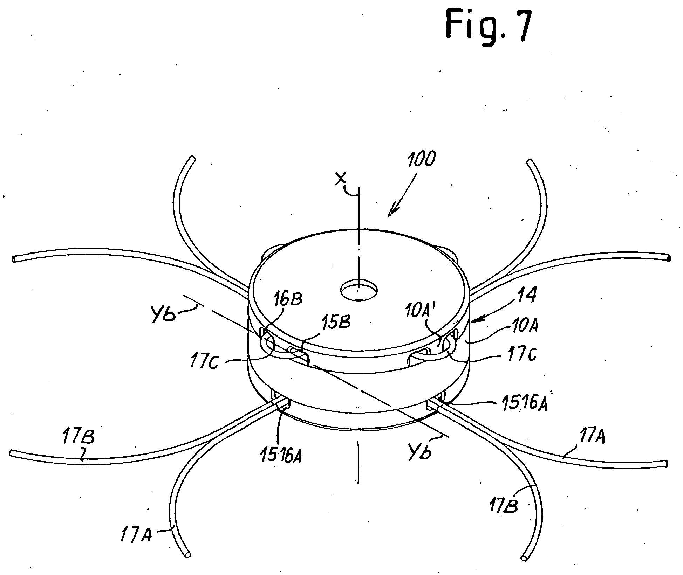

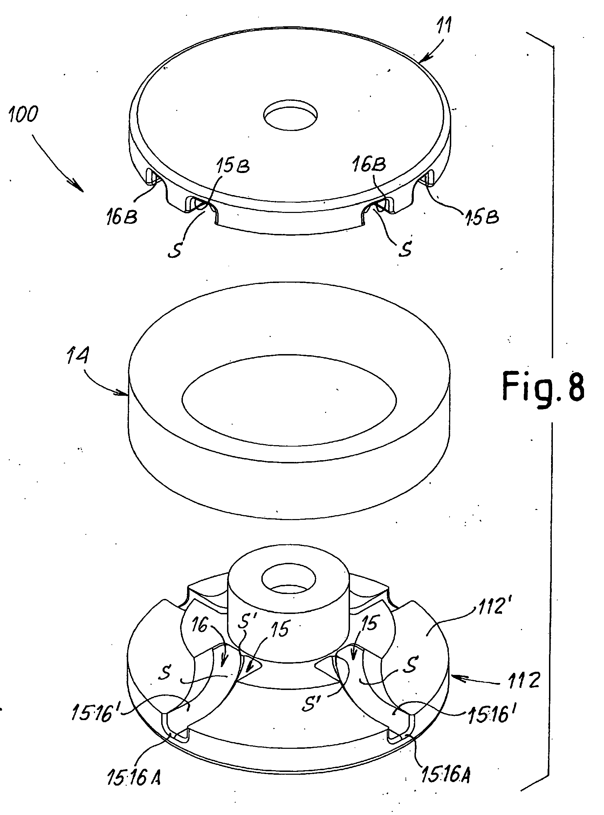

Figures 7 to 10 show a second embodiment of the head, indicated here by the number 100, which differs from the head 10 shown in the Figures from 1 to 6 (for simplicity, parts that are unchanged or that have changed in a non-significant manner, have the same numbering as in the previous example) due to the fact that the first openings 15A and 16A of the channels 15 and 16 from the previous example are, in this example, coincident in a single first opening indicated by the number 1516A. In practice, the channels 15 and 16 extend from a common first opening 1516A defined on the side face 14A of the intermediate body 14 (for example in an intermediate position between the first openings from the previous example) and from this opening they bifurcate (unless there is a short common section 1516') as far as the second openings 15B and 16B (defined for example in a position similar to that from the previous example). From a practical point of view, the user takes the line 17 by one end 17A, inserts it into a first opening 1516A, where the line follows the common section 1516' and then the channel 15 (or 16), and exits from the second opening 15B (or 16B). The user then takes the end 17A exiting from the second opening 15B and threads it into the second opening 16B (or 15B), partially winding around the part 10A' of the side face 10A of the head comprised between said second openings 15B and 16B. The line follows the second channel 16 (or 15), follows once again the common section 1516' and exits again from the first opening 1516A. In this example, too, the grooves S defining the channels 15 and 16 are produced on the half-surfaces 11' and 112' of the upper and lower bodies 11 and 112, with the grooves defined near the first common opening 1516A, and which are partially coincident for the section 1516', and are separated by a partition S' for the successive section.

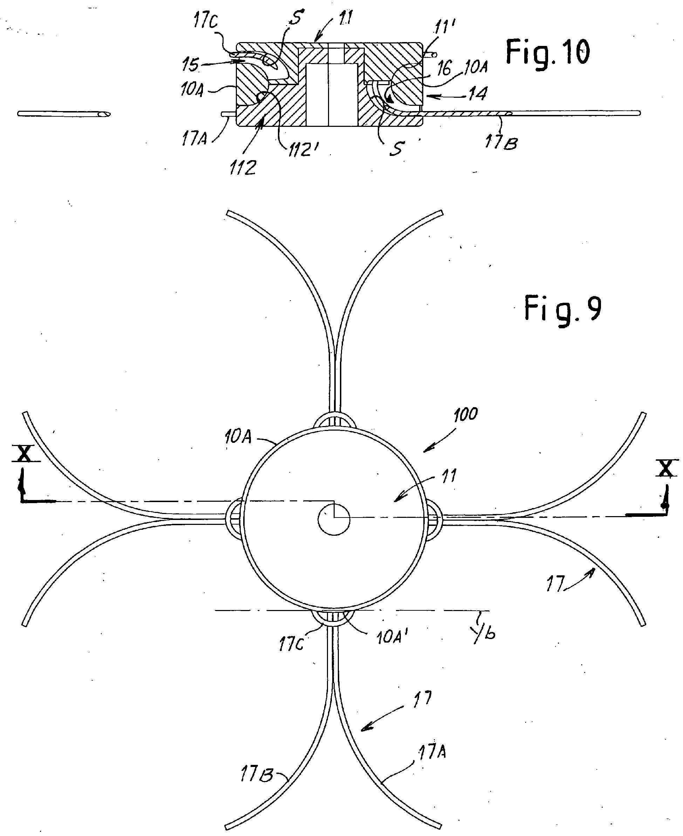

The second openings 15B-16B of the two channels 15 and 16 are aligned (line Yb in figure 7 and 9) on a respective plane orthogonal to the rotation axis X of the head. According to a plan view of the head (fig. 9), i.e. orthogonal to the X axis, the first common opening 1516A is angularly comprised between the second openings 15B-16B.

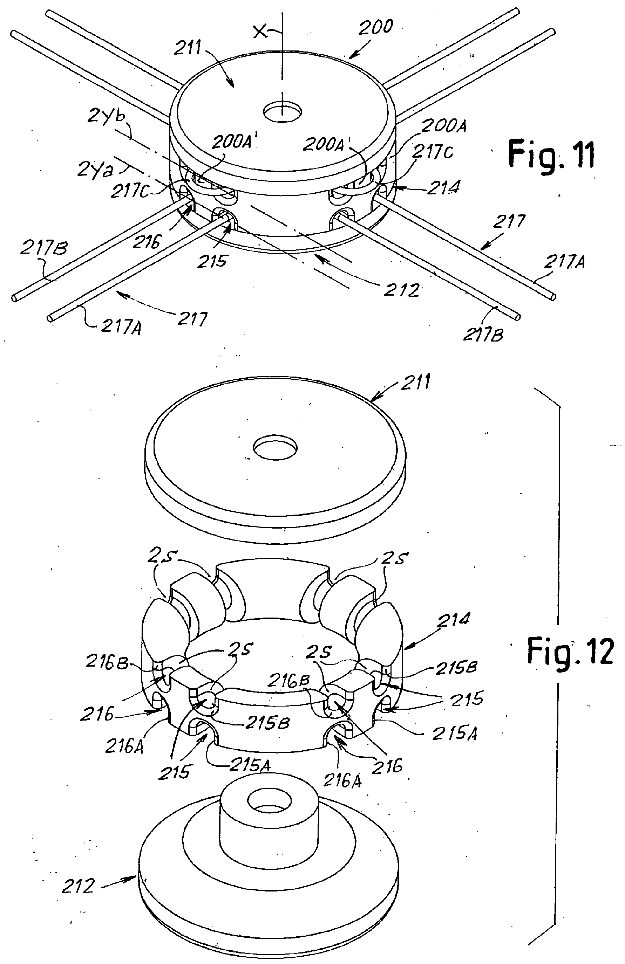

Figures 11 to 14 show a third embodiment of the head, indicated here by the number 200. This head differs from that shown in figure 1 due to the fact that the channels for the cutting line are made by grooves produced on the intermediate body closed by the inner surface of the cavity .

Therefore, like the previous cases, this head 200 comprises an upper body 211, discoidal with a circular plan shape and a lower body 212, also discoidal with a circular plan shape, coaxially coupled to the upper body 211.

The upper body 211 and the lower body 212 define on the head, when coupled, a peripheral side cavity 213, annular in this example, open toward the outside of the head. The inner surface of this cavity is produced by the abutting, preferably without interruption, of two peripheral half-surfaces of the related upper body 211 and lower body 212. In practice, the cavity 213 is formed by a roof defined by the half-surface 211' of the upper body 211 facing downwards, a bottom defined by the half-surface 212' of the lower body facing upwards, and a bottom facing outwards defined at the meeting point of both the half-surfaces 211'-212" of the upper and lower body that are connected to one another.

The cavity 213 houses an intermediate body 214, with an annular or toroidal shape. With the intermediate body 214 arranged between the upper body 211 and lower body 212, pairs of channels 215 and 216 are defined on the head 200 for housing a single cutting line 217. As in the previous case, also in this example four pairs of channels are defined (for four respective cutting lines), arranged angularly staggered by 90° around the rotation axis X of the head.

The channels 215 and 216 have respective end openings 215A-215B and 216A-226B defined on the side face 200A of the head. The single cutting line 217 is arranged with its ends 217A and 217B exiting from the respective first end openings 215A, 216A of the two channels 215 and 216 and with the central portion 217C of the line partially wound on the outer periphery of the head, i.e. on the part 210A' of the side face 210A of the head, comprised between the second openings 215B and 216B of the two channels, with the line respectively exiting and entering said second openings, as shown in Figure 7.

Therefore, the head 200 has a plurality of cutting lines (or only one in the simplest embodiment) that exit from respective openings defined on the side face 200A of the head 200 and where these openings, for each line, are comprised in a limited angular sector of the head, for example comprised between 70° and 10°, and more preferably less than 45°. In practice, the head has cutting zones, in limited angular sectors, fitted with pairs of cutting organs corresponding to the ends of a single cutting line.

In this type of embodiment, the channels 215 and 216 are formed by grooves 2S produced on the inner surface 214' of the intermediate body 214 facing the cavity 213 and closed by the half-surfaces 211', 212' forming the cavity 213. It should be noted that the parts of the grooves defined on the intermediate body 214 are without undercut portions with respect to the respective upper and lower bodies they are facing, and in any case with respect to a plane orthogonal to the axis X.

In this example, due to the fact that the grooves are defined substantially on the intermediate body 214, the end openings 215A, 216A, 215B, 216B are defined, in practice, as U-shape sections on opposing parts of the intermediate body 14, and are closed on the open side of the "U" by the upper and lower bodies 211 and 212.

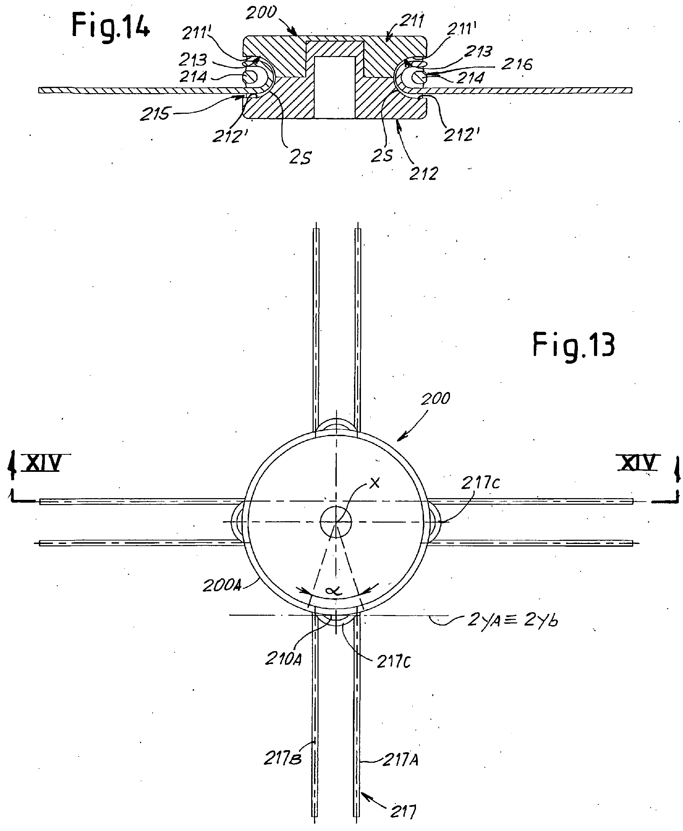

The second openings 215B-216B of the two channels 215 and 216 are aligned (lines 2Ya and 2Yb in figure 11 and 13) on respective planes orthogonal to the rotation axis X of the head.

Opportunely, in preferred embodiments, such as for example the embodiment described, the upper body 211 is one piece, as is the lower body 212 and also the intermediate body 214. In practice, the head is formed substantially from three main bodies, each one a single piece and of a shape without any undercut portions with respect to a surface orthogonal to the rotation axis of the head.

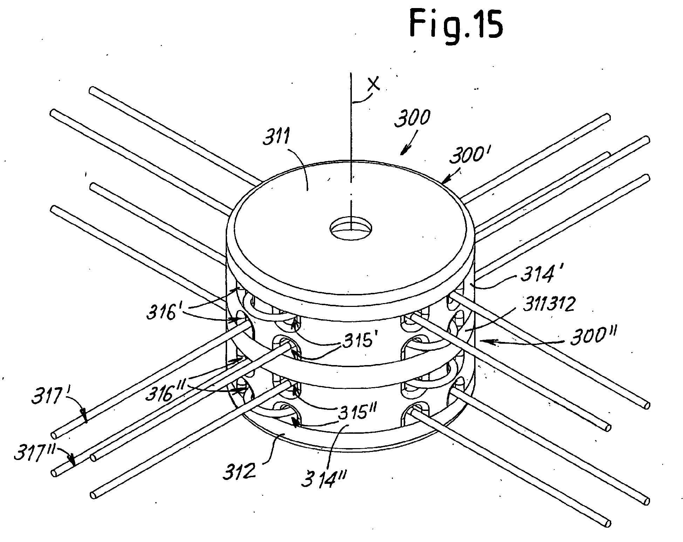

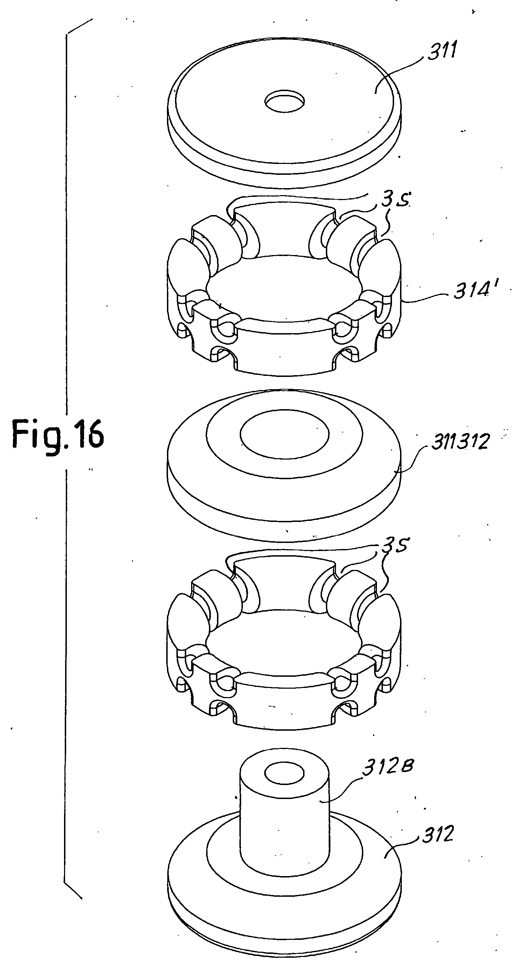

Figures 15 and 16 show a fourth embodiment of a head according to the invention, indicated as a whole by the number 300. This head differs from the head 200 described previously, due to the fact that it is "multi-level". In practice, the head 300 is formed by two heads associated axially, with the lower body of the higher head forming the upper body of the lower head, and with the cutting zones of the two heads (i.e. the angular sectors occupied by the first and second openings for the single cutting line) superimposed and angularly aligned. It goes without saying that in other embodiments the multi-level head may be produced by axially coupling two heads 200 (but the concept of a multi-level head applies to all the examples described above) by means of appropriate connecting means.

More specifically, in the example described, the head 300 is formed by two axial head portions, an upper portion 300' and a lower portion 300", substantially similar to the example of the head 200 referred to. Therefore, the upper portion is formed by an upper body 311 and a median plate 311312, defining, when coupled, an upper peripheral side cavity, annular in this example, open toward the outside of the head. The cavity houses a first intermediate body 314', with an annular or toroidal shape. With the intermediate body 314' arranged between the upper body 311 and the median plate 311312, pairs of channels 315' and 316' are defined in the upper head portion 300 for housing a single cutting line 317'.

As in the previous case, channels 315' and 316' are formed by grooves 3S' produced on the inner surface of the first intermediate body 314' facing the cavity and closed by the surface of the same cavity.

The lower head portion 300" is formed by the median plate 311312 (in common with the upper portion 300') and by a lower body 312, defining, when coupled, a lower peripheral side cavity, annular in this example, open toward the outside of the head. The cavity houses a second intermediate body 314", with an annular or toroidal shape. With the second intermediate body 314" arranged between the lower body 312 and the median plate 311312, pairs of channels 315" and 316" are defined in the lower head portion 300" for housing a single cutting line 317".

The openings of the channels related to the upper head portion 300" are aligned or superimposed, with axial reference, with the openings of the channels on the lower portion 300".

As in the previous case, the channels 315" and 316" are formed by grooves 3S" produced at the inner surface of the second intermediate body 314" facing the lower cavity; these grooves are closed by the surface of the same cavity.

The lower body 312 has a hub 312B adapted to connect with the upper body 311 and defining the connecting zone for the drive shaft of the brushcutter with which the head is associated. The median plate 311312 is opportunely perforated in the center to allow the passage of the hub 312B.

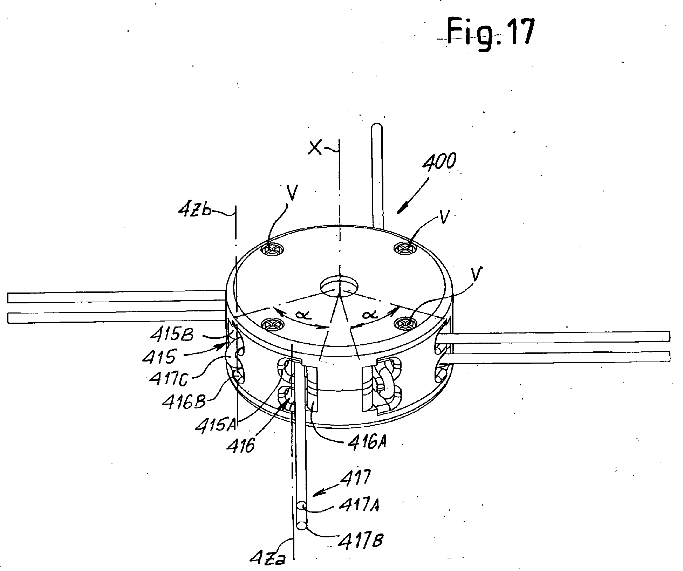

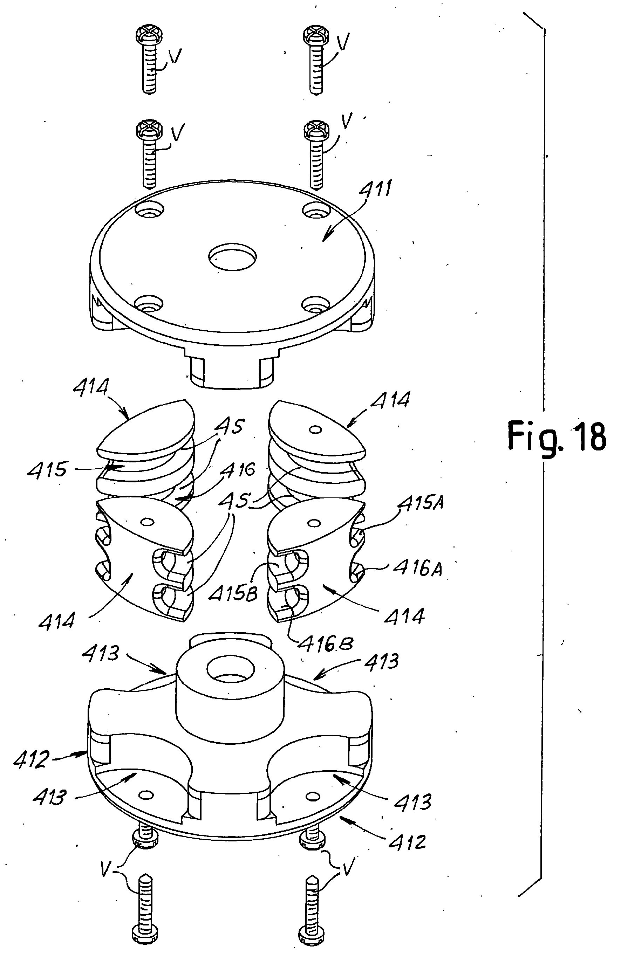

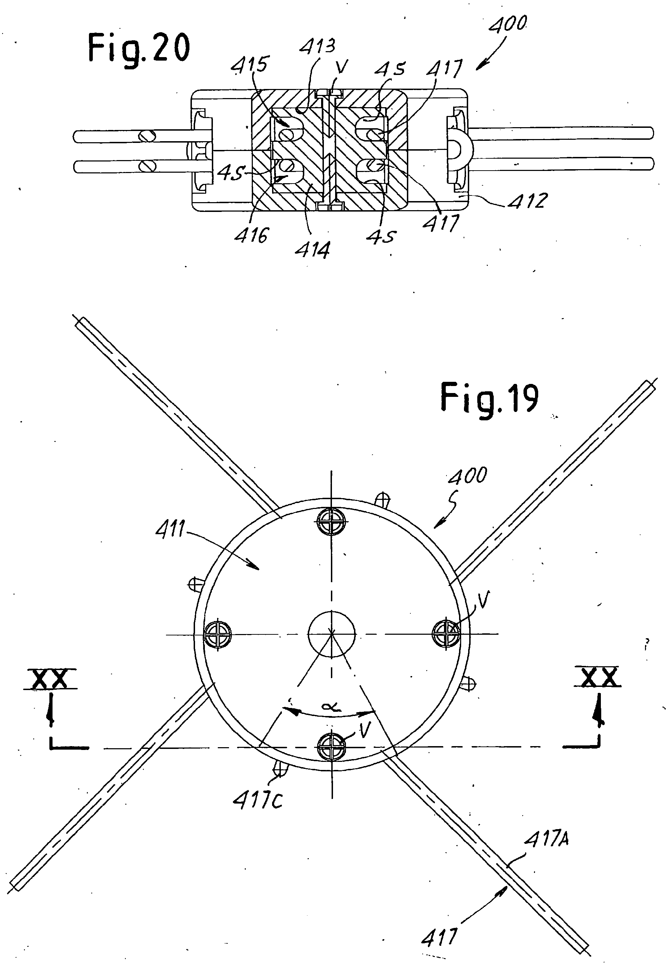

Figures 17 to 20 show a fifth embodiment of the head according to the invention, indicated here by the number 400. In this case, the head comprises an upper body 411 and a lower body 412 defining laterally, on the side periphery of said head, a plurality of cavities 413 open toward the outside, for housing respective intermediate bodies 414. In this example there are four intermediate bodies 414 angularly staggered by 90°.

Each intermediate body has surface grooves 4S open toward the cavity 413, in a U-shape, which, with the surface of the cavity itself, define the channels 415 and 416 for the respective cutting line 417. In this example the channels 415 and 416 with their respective openings, are rotated by 90° with respect to the previous examples. In practice, the first openings 415A, 416A are superimposed and aligned along the line 4Za in a direction parallel to the rotation axis X of the head, as are the second openings 415B, 416B (aligned in the direction of the line 4Zb). The line 417 is arranged with its end sections 417A and 417B superimposed on one another (with reference to the axial direction), with the central section 417C partially winding around the section of intermediate body 414 comprised between the second openings 416B and 415B.

The upper body 411, the lower body 412 and the intermediate bodies 414 are fixed together, for example, by means of threaded connections V passing through the intermediate bodies.

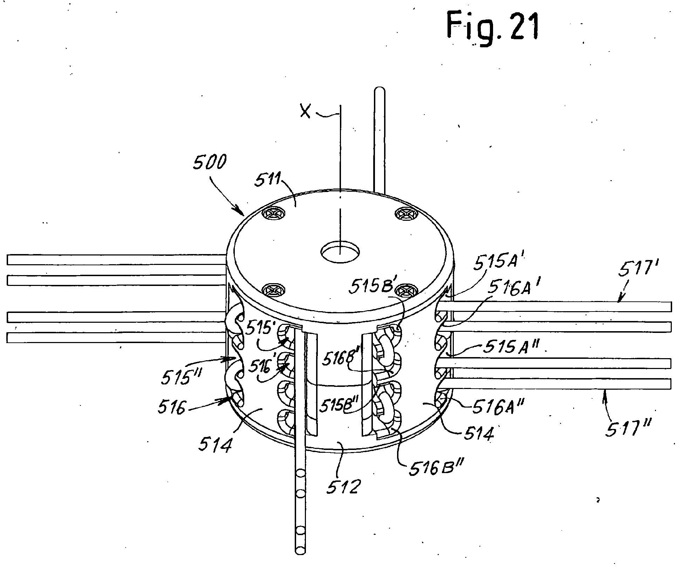

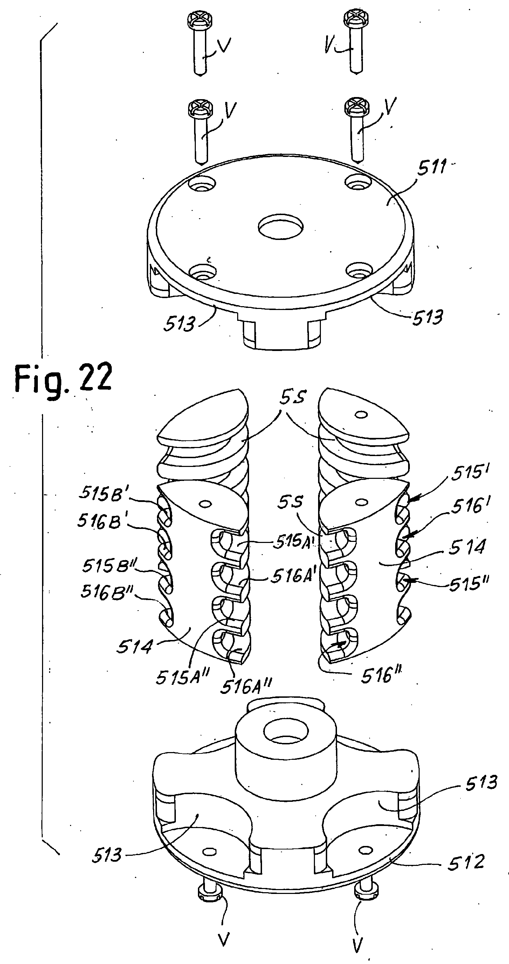

Figures 21 and 22 show a sixth embodiment of the head, indicated here by the number 500, similar to that shown in figures 17-20, but differing from it simply due to the fact that it is in practice a multi-level head, and more particularly that it has intermediate bodies 514 that have two pairs of channels 515', 516', 515" and 516" superimposed on one another, formed by the grooves 5S on the surface of the intermediate bodies, with the first openings 515A', 516A', 515A" and 516A" aligned and superimposed on one another with reference to the direction of the rotation axis X. Therefore each intermediate body carries two axially superimposed cutting lines 517' and 517". It goes without saying that in other embodiments, the multi-level structure may be achieved using two (or more) intermediate bodies such as those of the head 400 superimposed in an axial direction.

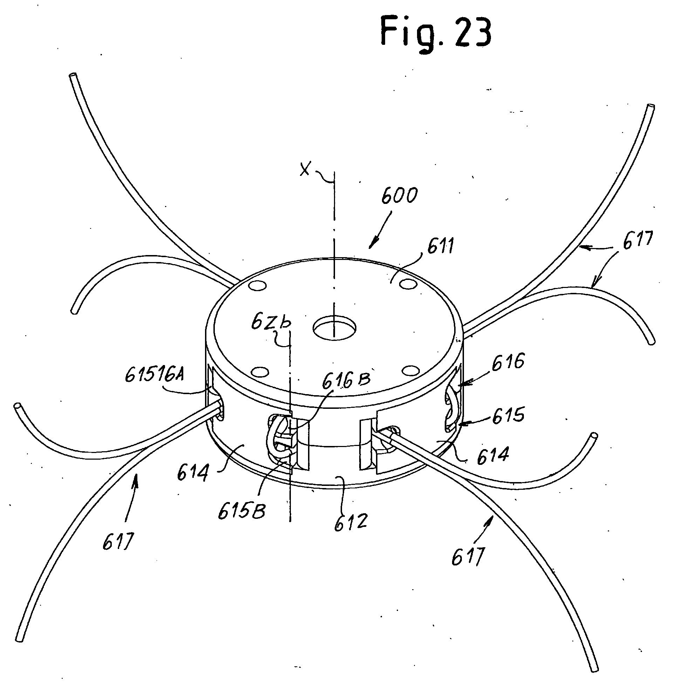

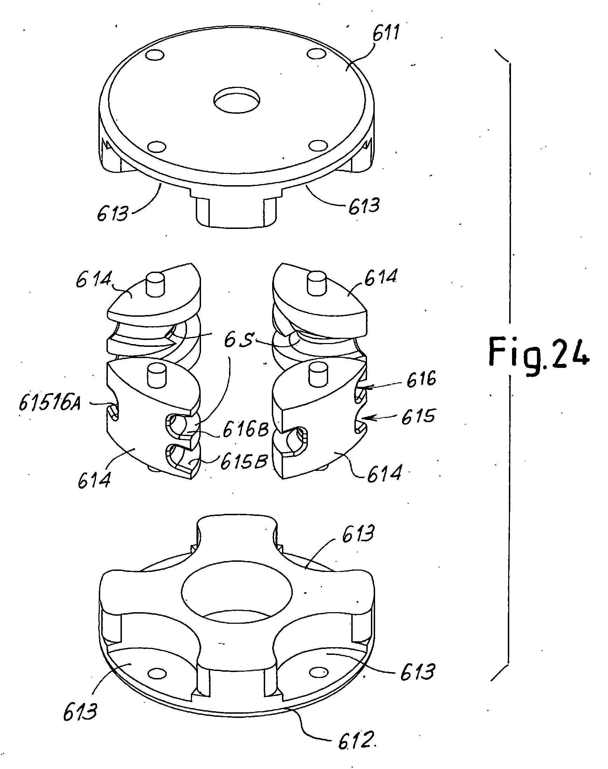

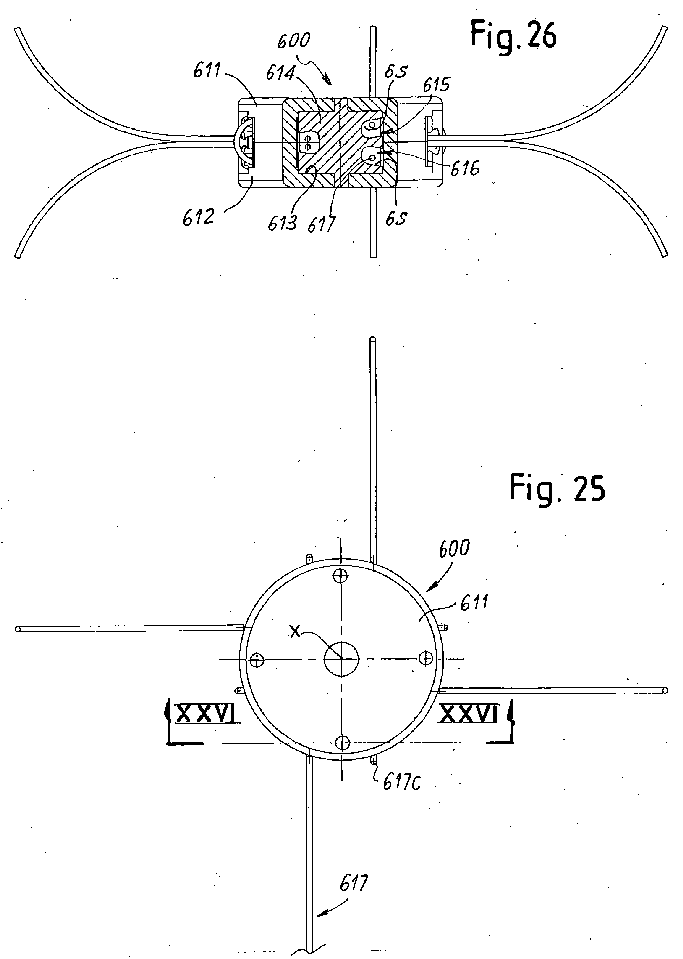

Figures 23 to 26 show a seventh embodiment of the head, indicated here by the number 600. In practice, this is a combination of head 400 with head 100, and more particularly with the arrangement of the channels with a common section of the head 100 applied to the case of head 400 with a plurality of intermediate bodies, with the channels rotated by 90° with respect to the case of head 100.

In practice, the head 600 comprises an upper body 611 and a lower body 612 defining laterally, on the side periphery of said head, a plurality of cavities 613 open toward the outside, for housing respective intermediate bodies 614. The first openings of the channels 615 and 616 (produced by means of grooves 6S on the intermediate body 614) coincident in a single first opening indicated by the number 61516A. In practice, the channels 615 and 616 extend from a common first opening 61516A defined on the side face 614A of the intermediate body 614 and from this opening they bifurcate (unless there is a short common section) as far as the second openings 615B and 616B, which are superimposed and aligned along a line 6Zb parallel to the axis X.

It goes without saying that the combinations of characteristics of these embodiments may be multiple. For example, it is possible to envisage an embodiment of the head (not shown in the figures) wherein there is a plurality of cavities (similar for example to the cavities described for the fifth embodiment, figure 17-20) for housing an equal number of intermediate bodies formed by angular portions of the annular "donut" described in the third embodiment, figures 11-14 (in practice with the grooves produced on the intermediate bodies), or with intermediate bodies such as those formed by angular portions of the annular "donut" described in the first embodiment (in practice with the grooves defined on the surface of the individual cavities).

It is understood that the drawings only show possible non-limiting embodiments of the invention, which can vary in form and arrangement without however departing from the scope of the concept on which the invention is based. Any reference numerals in the appended claims are provided purely to facilitate the reading thereof, in the light of the above description and accompanying drawings, and do not in any way limit the scope of protection.

## Claims

1. An axial rotation grass-cutting head, comprising for at least one portion thereof, an upper body (11, 211, 311, 411, 511, 611), a lower body (12, 112, 212, 312, 412, 512, 612) and at least one intermediate body (14, 214, 314, 414, 514, 614) arranged between said upper and lower body, said upper, lower and intermediate bodies defining, when coupled, two channels (15, 16, 215, 216, 315', 316', 415, 416, 515', 516', 615, 616) for housing a single cutting line (17, 217, 317, 417, 517, 617), having respective end openings on the side face of the head, said channels being formed at least partly by grooves (S, 2S, 3S, 4S, 5S, 6S) produced at the surfaces of said upper and lower body facing said intermediate body or vice versa on said intermediate body, said grooves (S, 2S, 3S, 4S, 5S, 6S) being closed to delimit said channels from the surface of said intermediate body or vice versa from the surfaces of said upper and lower bodies, said cutting line (17, 217, 317, 417, 517, 617) being adapted to fit into said channels (15, 16,215, 216, 315', 316', 415, 416, 515', 516', 615, 616) with its ends exiting from the respective first end openings (15A, 16A, 1516A, 215A, 216A, 315A, 316A, 415A, 416A, 515A, 516A, 61516A) of the two channels and with the central portion (17C, 217C, 317C, 417C, 517C, 617C) of the line partially wound on the outer periphery of the head comprised between the second openings (15B, 16B, 215B, 216B, 315B, 316B, 415B, 416B, 515B, 516B, 615B, 616B) of the two channels, with the line respectively exiting and entering said second openings.

2. A grass-cutting head according to claim 1, wherein said upper body (11, 211, 311, 411, 511, 611) and lower body (11, 211, 311, 411, 511, 611) define on the head, when coupled, at least one peripheral side cavity (13, 213, 313, 413, 513, 613) open toward the outside of the head, the inner surface of which is produced by the abutting of two peripheral half-surfaces of the related upper and lower bodies, said at least one intermediate body (14, 214, 314, 414, 514, 614) being housed in said cavity, said upper, lower and intermediate bodies defining, when coupled, said two channels (15, 16, 215, 216, 315', 316', 415, 416, 515', 516', 615, 616) for housing a single cutting line (17, 217, 317, 417, 517, 617), said channels being delimited by the inner surface of said cavity and by the surface of said intermediate body facing said cavity.

3. A grass-cutting head according to claim 2, wherein said channels (15, 16) are defined prevalently on the inner surface of said cavity, produced by means of grooves (S) made on the surface of the cavity (13).

4. A grass-cutting head according to claim 2 or 3, wherein each said channel (15, 16) comprises two half-channels at least partially made on the respective peripheral half-surfaces of the respective upper (11) and lower (12, 112) bodies defining the inner surface of said cavity, said two half-channels being arranged without interruption when the two upper and lower bodies are coupled.

5. A grass-cutting head according to claim 4, wherein said half-channels comprise grooves (S) produced on said half-surfaces, said grooves being open toward the intermediate body delimiting the grooves to form the half-channels and being without undercut portions with respect to said opposite body.

6. A grass-cutting head according to one or more of the previous claims, wherein preferably, said upper body (11, 211, 311, 411, 511, 611) is produced in one piece, and wherein preferably said lower body (12, 112, 212, 312, 412, 512, 612) is produced in one piece.

7. A grass-cutting head according to one or more of the previous claims, wherein in said portion of head said intermediate body (14, 214, 314, 414, 514, 614) is produced in one piece.

8. A grass-cutting head according to one or more of the previous claim, wherein said end openings of the two channels are comprised in a limited angular sector of the head, preferably comprised between 70° and 10° and more preferably less than 45°.

9. A grass-cutting head according to one or more of the previous claims, wherein said first (15A, 16A, 1516A, 215A, 216A, 315A, 316A, 415A, 416A, 515A, 516A, 61516A) and second end openings (15B, 16B, 215B, 216B, 315B, 316B, 415B, 416B, 515B, 516B, 615B, 616B) of the two channels are aligned on respective planes orthogonal to the rotation axis of the head or aligned parallel to the rotation axis of the head, i.e. preferably superimposed vertically.

10. A grass-cutting head according to claim 9, wherein said second end openings (415B, 416B, 515B, 516B, 615B, 616B) of the two channels are aligned parallel to the rotation axis of the head, i.e. preferably superimposed vertically.

11. A grass-cutting head according to one or more of the previous claims, wherein said end openings (15A, 15B, 16A, 16B, 1516A,) are defined in said upper (11) and lower (12, 112) body and are closed on one side by said intermediate body.

12. A grass-cutting head according to one or more of the previous claims, wherein said peripheral cavity (13, 213, 313) extends annularly around the whole of the head and said intermediate body (14, 214, 314) is an annular body which is arranged in said annular cavity.

13. A grass-cutting head according to one or more of the previous claims, wherein said channels (215, 216, 315, 316, 415, 416, 515, 516, 615, 616) are defined prevalently on the surface of said intermediate body facing said cavity, produced by means of grooves made on said surface of said intermediate body (214, 314, 414, 514, 614), preferably said end openings of said channels being defined in said intermediate body and closed on one side respectively by said lower body and intermediate body; preferably said grooves being open toward the upper and lower bodies delimiting the same bodies, to form the channels, said grooves being without undercut portions with respect to said upper and lower bodies.

14. A grass-cutting head according to one or more of the previous claims, comprising a plurality of said intermediate bodies (214, 314, 414, 514, 614) arranged on the side periphery of said head, in a common annular cavity or in respective cavities; preferably each said intermediate body being arranged in a respective said cavity and having two said channels and with said first and second end openings produced on said body and arranged on respective planes parallel to the rotation axis of the heads, said channels being formed by grooves defined on the side surface of said intermediate body and closed to produce said channels by the surface of said cavity.

15. A grass-cutting head according to one or more of the previous claims, wherein said intermediate body is provided with at least two pairs of said channels, with the respective end openings aligned according to directions parallel to the rotation axis of the head.

## Patentansprüche

1. Grasschneidekopf mit axialer Rotation, der für mindestens einen Teil davon einen oberen Körper (11, 211, 311, 411, 511, 611), einen unteren Körper (12, 112, 212, 312, 412, 512, 612) und mindestens einen mittleren Körper (14, 214, 314, 414, 514, 614), der zwischen dem oberen und unteren Körper angeordnet ist, umfasst, wobei der obere, untere und mittlere Körper, wenn sie verbunden sind, zwei Kanäle (15, 16, 215, 216, 315', 316', 415, 416, 515', 516', 615, 616) zum Aufnehmen eines einzelnen Schneidfadens (17, 217, 317, 417, 517, 617), mit jeweiligen Endöffnungen auf der Seitenfläche des Kopfes definieren, wobei die Kanäle mindestens teilweise durch Nuten (S, 2S, 3S, 4S, 5S, 6S), die an den Oberflächen des oberen und unteren Körpers, die dem mittleren Körper gegenüber liegen, oder umgekehrt auf dem mittleren Körper hergestellt sind, gebildet sind, die Nuten (S, 2S, 3S, 4S, 5S, 6S) geschlossen sind, um die Kanäle von der Oberfläche des mittleren Körpers oder umgekehrt von den Oberflächen des oberen und unteren Körpers abzugrenzen, der Schneidfaden (17, 217, 317, 417, 517, 617) eingerichtet ist, in die Kanäle (15, 16, 215, 216, 315', 316', 415, 416, 515', 516', 615, 616) zu passen, wobei seine Enden aus den jeweiligen ersten Endöffnungen (15A, 16A, 1516A, 215A, 216A, 315A, 316A, 415A, 416A, 51 5A, 516A, 61516A) der zwei Kanäle austreten und der Mittelteil (17C, 217C, 31 7C, 417C, 51 7C, 617C) des Fadens teilweise gewickelt auf dem äußeren Umfang des Kopfes zwischen den zweiten Öffnungen (15B, 16B, 215B, 216B, 315B, 316B, 415B, 416B, 515B, 516B, 615B, 616B) der zwei Kanäle umfasst ist, wobei der Faden aus den zweiten Öffnungen jeweils austritt und in sie eintritt.

2. Grasschneidekopf gemäß Anspruch 1, wobei der obere Körper (11, 211, 311, 411, 511, 611) und untere Körper (12, 112, 212, 312, 412, 512, 612) auf dem Kopf, wenn sie verbunden sind, mindestens eine periphere Seitenaushöhlung (13, 213, 313, 413, 513, 613), definieren, die zur Außenseite des Kopfes hin offen ist, deren Innenoberfläche durch das Anliegen von zwei peripheren Halboberflächen des betroffenen oberen und unteren Körpers hergestellt ist, wobei der mindestens eine mittlere Körper (14, 214, 314, 414, 514, 614) in der Aushöhlung aufgenommen ist, der obere, untere und mittlere Körper, wenn sie verbunden sind, die zwei Kanäle (15, 16, 215, 216, 315', 316', 415, 416, 515', 516', 615, 616) zum Aufnehmen eines einzelnen Schneidfadens (17, 217, 317, 417, 517, 617) definieren, wobei die Kanäle durch die innere Oberfläche der Aushöhlung und durch die Oberfläche des mittleren Körpers, die der Aushöhlung zugewendet ist, abgegrenzt sind.

3. Grasschneidekopf gemäß Anspruch 2, wobei die Kanäle (15, 16) vorwiegend auf der inneren Oberfläche der Aushöhlung, hergestellt mittels Nuten (S), die auf der Oberfläche der Aushöhlung (13) hergestellt sind, definiert sind.

4. Grasschneidekopf gemäß Anspruch 2 oder 3, wobei jeder der Kanäle (15, 16) zwei Halbkanäle umfasst, die mindestens teilweise auf den jeweiligen peripheren Halboberflächen des jeweiligen oberen (11) und unteren (12, 112) Körpers hergestellt sind, welche die innere Oberfläche der Aushöhlung definieren, wobei die beiden Halbkanäle ohne Unterbrechung angeordnet sind, wenn die beiden oberen und unteren Körper verbunden sind.

5. Grasschneidekopf gemäß Anspruch 4, wobei die Halbkanäle Nuten (S) umfassen, die auf den Halboberflächen hergestellt sind, wobei die Nuten in Richtung des mittleren Körpers offen sind, der die Nuten abgrenzt, um die Halbkanäle zu bilden, und ohne hinterschnittene Teile hinsichtlich des gegenüberliegenden Körpers sind.

6. Grasschneidekopf gemäß einem oder mehreren der vorhergehenden Ansprüche, wobei bevorzugt der obere Körper (11, 211, 311, 411, 511, 611) in einem Stück hergestellt ist und wobei bevorzugt der untere Körper (12, 112, 212, 312, 412, 512, 612) in einem Stück hergestellt ist.

7. Grasschneidekopf gemäß einem oder mehreren der vorhergehenden Ansprüche, wobei in dem Teil des Kopfes der mittlere Körper (14, 214, 314, 414, 514, 614) in einem Stück hergestellt ist.

8. Grasschneidekopf gemäß einem oder mehreren der vorhergehenden Ansprüche, wobei die Endöffnungen der zwei Kanäle in einem eingeschränkten Winkelsektor des Kopfes eingeschlossen sind, bevorzugt zwischen 70° und 10° und stärker bevorzugt weniger als 45° eingeschlossen sind.

9. Grasschneidekopf gemäß einem oder mehreren der vorhergehenden Ansprüche, wobei die ersten (15A, 16A, 1516A, 215A, 21 6A, 31 5A, 316A, 415A, 416A, 515A, 516A, 61516A) und zweiten Endöffnungen (15B, 16B, 215B, 216B, 315B, 316B, 415B, 416B, 515B, 516B, 615B, 616B) der zwei Kanäle auf jeweiligen Ebenen rechtwinklig zu der Rotationsachse des Kopfes ausgerichtet sind oder parallel zu der Rotationsachse des Kopfes ausgerichtet sind, d.h. bevorzugt vertikal überlagert sind.

10. Grasschneidekopf gemäß Anspruch 9, wobei die zweiten Endöffnungen (415B, 416B, 515B, 516B, 615B, 616B) der zwei Kanäle parallel zu der Rotationsachse des Kopfes ausgerichtet sind, d.h. bevorzugt vertikal überlagert sind.

11. Grasschneidekopf gemäß einem oder mehreren der vorhergehenden Ansprüche, wobei die Endöffnungen (15A, 15B, 16A, 16B, 1516A) in dem oberen (11) und unteren (12, 112) Körper definiert sind und auf einer Seite durch den mittleren Körper geschlossen sind.

12. Grasschneidekopf gemäß einem oder mehreren der vorhergehenden Ansprüche, wobei die periphere Aushöhlung (13, 213, 313) sich ringförmig um die Gesamtheit des Kopfes erstreckt und der mittlere Körper (14, 214, 314) ein ringförmiger Körper ist, der in der ringförmigen Aushöhlung angeordnet ist.

13. Grasschneidekopf gemäß einem oder mehreren der vorhergehenden Ansprüche, wobei die Kanäle (215, 216, 315, 316, 415, 416, 515, 516, 615, 616) überwiegend auf der Oberfläche des mittleren Körpers, die der Aushöhlung zugewendet ist, definiert sind, hergestellt mittels Nuten, die auf der Oberfläche des mittleren Körpers (214, 314, 414, 514, 614) hergestellt sind, wobei die Endöffnungen der Kanäle bevorzugt in dem mittleren Körper definiert sind und auf einer Seite jeweils durch den unteren Körper und mittleren Körper geschlossen sind; wobei die Nuten bevorzugt in Richtung des oberen und unteren Körpers offen sind, sodass sie dieselben Körper abgrenzen, um die Kanäle zu bilden, wobei die Nuten ohne hinterschnittene Teile hinsichtlich des oberen und unteren Körpers sind.

14. Grasschneidekopf gemäß einem oder mehreren der vorhergehenden Ansprüche, der eine Anzahl der mittleren Körper (214, 314, 414, 514, 614) umfasst, die auf dem seitlichen Umfang des Kopfes, in einer gemeinsamen ringförmigen Aushöhlung oder in jeweiligen Aushöhlung angeordnet sind, wobei bevorzugt jeder der mittleren Körper in einer jeweiligen Aushöhlung angeordnet ist und zwei Kanäle aufweist und mit den ersten und zweiten Endöffnungen auf dem Körper hergestellt ist und auf jeweiligen Ebenen parallel zu der Rotationsachse der Köpfe angeordnet ist, wobei die Kanäle durch Nuten gebildet sind, die auf der Seitenoberfläche des mittleren Körpers definiert sind und geschlossen sind, um die Kanäle herzustellen, durch die Oberfläche der Aushöhlung.

15. Grasschneidekopf gemäß einem oder mehreren der vorhergehenden Ansprüche, wobei der mittlere Körper mit mindestens zwei Paaren der Kanäle versehen ist, wobei die jeweiligen Endöffnungen gemäß Richtungen parallel zu der Rotationsachse des Kopfes ausgerichtet sind.

## Revendications

1. Une tête de coupe d'herbe à rotation axiale, comprenant au moins dans une partie de cette tête, un corps supérieur (11, 211, 311, 411, 511, 611), un corps intérieur (12, 112, 212, 312, 412, 512, 612) et au moins un corps intermédiaire (14, 214, 314, 414, 514, 614) agencé entre lesdits corps supérieur et inférieur, lesdits corps supérieur, inférieur et intermédiaire formant, lorsqu'ils sont couplés, deux canaux (15, 16, 215, 216, 315', 316', 415, 416, 515', 516', 615, 616) pour loger une unique ligne de coupe (17, 217, 317, 417, 517, 617), ayant des ouvertures d'extrémités respectives sur la face latérale de la tête, lesdits canaux étant formés au moins partiellement par des rainures (S, 2S, 3S, 4S, 5S, 6S) créées aux surfaces desdits corps supérieur et inférieur, tournées vers ledit corps intermédiaire ou vice-versa sur ledit corps intermédiaire, lesdites rainures (S, 2S, 3S, 4S, 5S, 6S) étant fermées pour délimiter lesdits canaux depuis la surface dudit corps intermédiaire ou vice-versa depuis les surfaces desdits corps supérieur et inférieur, ladite ligne de coupe (17, 217, 317, 417, 517, 617) étant adaptée pour s'insérer dans lesdits canaux (15, 16, 215, 216, 315', 316', 415, 416, 515', 516', 615, 616) avec son extrémité sortant des premières ouvertures d'extrémité respectives (15A, 16A, 1516A, 215A, 216A, 315A, 316A, 415A, 416A, 515a, 516A, 61516A) des deux canaux et avec la partie centrale (17C, 217C, 317C, 417C, 517C, 617C) de la ligne partiellement enroulée sur la périphérie extérieure de la tête comprise entre les secondes ouvertures (15B, 16B, 215B, 216B, 315B, 316B, 415B, 416B, 515B, 516B, 615B, 616B) des deux canaux, avec la ligne sortant et entrant respectivement dans lesdites secondes ouvertures.

2. Une tête de coupe d'herbe selon la revendication 1, dans laquelle lesdits corps supérieur (11, 211, 311, 411, 511, 611) et corps inférieur (11, 211, 311, 411, 511, 611) forment sur la tête, lorsqu'ils sont couplés, au moins une cavité latérale périphérique (13, 213, 313, 413, 513, 613) ouverte vers l'extérieur de la tête, la surface intérieure de laquelle est produite par la venue en bout-à-bout de deux demi-surfaces périphériques des corps relatifs supérieur et inférieur, ledit corps intermédiaire (14, 214, 314, 414, 514, 614) étant logé dans ladite cavité, lesdits corps supérieur, inférieur et intermédiaire formant, lorsqu'ils sont couplés, lesdits deux canaux (15, 16, 215, 216, 315', 316', 415, 416, 515', 516', 615, 616) pour loger une ligne de coupe unique (17, 217, 317, 417, 517, 617), lesdits canaux étant délimités par la surface intérieur de ladite cavité et par la surface dudit corps intermédiaire tourné vers ladite cavité.

3. Un tête de coupe d'herbe selon la revendication 2, dans laquelle lesdits canaux (15, 16) sont formés surtout à la surface intérieure de ladite cavité, produits au moyen de rainures (S) réalisées à la surface de la cavité (13).

4. Tête de coupe d'herbe selon la revendication 2 ou 3, dans laquelle chacun desdits canaux (15, 16) comprend deux demi-canaux au moins partiellement réalisés sur les demi-surfaces périphériques respectives des corps respectifs supérieur (11) et inférieur (12, 112) formant la surface intérieure de ladite cavité, lesdits deux demi-canaux étant agencés sans interruption lorsque les deux corps supérieur et inférieur sont couplés.

5. Une tête de coupe d'herbe selon la revendication 4, dans laquelle lesdits demi-canaux comprennent des rainures (S) produites sur lesdites demi-surfaces, lesdites rainures étant ouvertures vers le corps intermédiaire formant les rainures pour former les demi-canaux et étant sans parties coupées en contre-dépouille par rapport audit corps opposé.

6. Une tête de coupe d'herbe selon une ou plusieurs des revendications précédentes, dans laquelle, de préférence, ledit corps supérieur (11, 211, 311, 411, 511, 611) est produit en une seule pièce, et dans lequel de préférence ledit corps inférieur (12, 112, 212, 312, 412, 512, 612) est produit en une seule pièce.

7. Une tête de coupe d'herbe selon une ou plusieurs des revendications précédentes, dans laquelle dans ladite partie de tête, ledit corps intermédiaire (14, 214, 314, 414, 514, 614) est produit en une seule pièce.

8. Une tête de coupe d'herbe selon une ou plusieurs des revendications précédentes, dans laquelle lesdites ouvertures d'extrémité des deux canaux sont comprises dans un secteur angulaire limité de la tête, de préférence compris entre 70 et 10 degrés et plus préférablement de moins de 45 degrés.

9. Une tête de coupe d'herbe selon une ou plusieurs des revendications précédentes, dans laquelle lesdites première (15A, 16A, 1516A, 215A, 216A, 315A, 316A, 415A, 416A, 515A, 516A, 61516A) et seconde ouvertures d'extrémité (15B, 16B, 215B, 216B, 315B, 316B, 415B, 416B, 515B, 516B, 615B, 616B) des deux canaux sont alignées sur des plans respectifs orthogonaux à l'axe de rotation de la tête ou alignées parallèlement à l'axe de rotation de la tête, c'est-à-dire de préférence superposées verticalement.

10. Une tête de coupe d'herbe selon la revendication 9, dans laquelle lesdites secondes ouvertures d'extrémité (415B, 416B, 515B, 516B, 615B, 616B) des deux canaux sont alignées parallèlement à l'axe de rotation de la tête, c'est-à-dire de préférence superposées verticalement.

11. Une tête de coupe d'herbe selon une ou plusieurs des revendications précédentes, dans laquelle lesdites ouvertures d'extrémité (15A, 15B, 16A, 16B, 1516A) sont formées dans lesdits corps supérieur (11) et inférieur (12, 112) et sont fermées d'un côté par ledit corps intermédiaire.

12. Une tête de coupe selon une ou plusieurs des revendications précédentes, dans laquelle ladite cavité périphérique (13, 213, 313) s'étendent de manière annulaire autour de l'ensemble de la tête et dudit corps intermédiaire (14, 214, 314) et est un corps annulaire qui est agencé dans ladite cavité annulaire.

13. Une tête de coupe d'herbe selon une ou plusieurs des revendications précédentes, dans laquelle lesdits canaux (215, 216, 315, 316, 415, 416, 515, 516, 615, 616) sont formés surtout à la surface dudit corps intermédiaire tourné vers ladite cavité, créés au moyen de rainures réalisés à ladite surface dudit corps intermédiaire (214, 314, 414, 514, 614), de préférence, lesdites ouvertures d'extrémité desdits canaux étant formées dans ledit corps intermédiaire et fermées d'un côté respectivement par lesdits corps inférieur et corps intermédiaire ; lesdites rainures étant de préférence ouvertes vers les corps supérieur et inférieur formant les mêmes corps, pour former les canaux, lesdites rainures étant sans partie en contre-dépouille par rapport auxdits corps supérieur et inférieur.

14. Une tête de coupe d'herbe selon une ou plusieurs des revendications précédentes, comprenant une pluralité desdits corps intermédiaires (214, 314, 414, 514, 614) agencés sur la périphérie latérale de ladite tête, dans une cavité annulaire commune ou dans des cavités respectives ; chacun desdits corps intermédiaires étant de préférence agencé dans une cavité respective et ayant lesdits deux canaux et avec lesdites première et seconde ouvertures d'extrémité produites sur ledit corps et agencées sur des plans respectifs parallèles à l'axe de rotation des têtes, lesdits canaux étant formés par des rainures formées sur la surface latérale dudit corps intermédiaire et fermées pour produire lesdits canaux à la surface de ladite cavité.

15. Une tête de coupe d'herbe selon une ou plusieurs des revendications précédentes, dans laquelle ledit corps intermédiaire est prévu avec au moins deux paires desdits canaux, avec les ouvertures d'extrémité respectives alignées suivant des directions parallèles à l'axe de rotation de la tête.
